(19) Europäisches Patentamt
European Patent Office
Office européen des brevets

(11) **EP 1 956 537 A1**

(12) **EUROPEAN PATENT APPLICATION**

(43) Date of publication:
**13.08.2008 Bulletin 2008/33**

(51) Int Cl.:
***G06Q 10/00*** *(2006.01)*

(21) Application number: **07425070.5**

(22) Date of filing: **07.02.2007**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(71) Applicant: **C.R.F. Società Consortile per Azioni**
**10043 - Orbassano (Torino) (IT)**

(72) Inventor: **Carignano, Massimo**
**10043 Orbassano (IT)**

(74) Representative: **Cerbaro, Elena et al**
**Studio Torta S.r.l.**
**Via Viotti, 9**
**10121 Torino (IT)**

(54) **Method for determining the complexity of a process of type approval of an interconnected system**

(57)     Described herein is a method for determining the complexity of a process of type approval of an interconnected system, characterized in that it comprises:
- defining a mathematical formalism that links architectural and functional characteristics of said interconnected system to criteria of type approval defined in at least one standard; and
- determining a quantity that provides an indication of the complexity of said process of type approval on the basis of said mathematical formalism.

```
Identify number and
type of components      100
of the system
        ↓
Identify number of
interconnections between the   110
components of the system
        ↓
Define dimensions of the    120
system
        ↓
Define number of functions of
the system and number of    130
functions of the components
        ↓
Identify number of directives,   140
standards, specifications, and tests
        ↓
Define certification     150
matrix
        ↓
Process certification    160
matrix
        ↓
Determine dimension
of standardization       170
of system
        ↓
Determine standardization   180
complexity of the system
        ↓
Determine degree of
interconnection of       190
components of the system
        ↓
        (A)
```

Fig.2

EP 1 956 537 A1

**Description**

The present invention relates to a method for determining the complexity of a process of type approval of an interconnected system.

As is known, interconnected systems are formed by a set of components, such as, for example, electrical, mechanical, electronic, hydraulic, thermal devices, etc., interconnected to one another in such a way as to enable the system to perform the functions for which it is designed.

It is moreover known how, in order to obtain type approval of the system itself before it is set in operation, it is necessary to verify that it meets given criteria, for example environmental criteria, safety criteria, criteria of strength, reliability, noise, etc., imposed by the legislation currently in force in the community where type approval of the system is to be obtained.

It is clear how the more complex the interconnected system is, the more complex and costly its process of type approval becomes, which depends basically upon the dimensions of the system itself. It is obvious in fact that, as the number of components of the system and the the number of interconnections between them increase, both the number of standards to be taken into consideration and the number of tests to be carried out in order to establish whether the system meets the requirements and the criteria established by the standard currently in force, increase.

Furthermore, once the tests necessary for verifying normative compliance of the system have been carried out, in the case where one or more components of the system are eliminated or replaced with different components, it is necessary to repeat the entire procedure of type approval to verify whether also the new configuration of the system meets the requirements and criteria established by the standards currently in force.

Consequently, there is felt the need for a method that, during the stage of design of an interconnected system, will provide an indication regarding the complexity of the procedure of type approval of the system that is to be designed and that will enable design of the interconnected system also according to the complexity of said procedure and the costs linked thereto.

The above aim is achieved by the present invention in so far as it relates to a method for determining the complexity of a process of type approval of an interconnected system, as defined in the annexed claims.

For a better understanding of the present invention, it is first of all necessary to define a mathematical formalism (i.e., a set of relations and functions) that will describe and will establish the path to follow to arrive at determining the degree of complexity of the aforesaid process of type approval.

In particular, in order to be able to define the process of type approval of an interconnected system, hereinafter designated by $S_{CE}$, it is necessary to define some concepts and entities on which to base the procedure. As first point in tackling our problem, it is proposed to give a rigorous meaning to the term *standardization,* which can be defined as the process that, starting from the directives established by current legislation, and through execution of individual tests, leads to the type approval of each component of an interconnected system, of the entire system, or of a system interconnected with other interconnected systems.

In particular, current legislation envisages that the process of type approval of an interconnected system will be carried out on the basis of:

- *directives,*
- *standards,*
- *specifications,* and
- *tests;*

where by directive is meant a community standard whereby various bodies of the European Community (Parliament, Commission, Council) indicate how to deal with a particular problem.

In particular, the directive establishes the binding targets that the Member States to which the directive applies must achieve within a certain term, whilst the forms and means for achieving said targets are chosen by the national bodies of each individual Member State.

Consequently, designating by $D_i$ a directive, it is possible to define the space of the directives $S_D$ as the set of all the possible directives present in a given legislation, i.e., as

$$S_D = \bigcup_i D_i \quad \text{where} \quad i=1,\dots,n \quad (1)$$

From the definition of Eq. (1) it may be noted how the space of the directives $S_D$ comprises all the possible directives of a legislation and not only the ones that refer to the system for which it is desired to obtain type approval.

Consequently, once an interconnected system $S_{CE}$ for which to obtain type approval has been defined, it is clear how the directives involved in the process of type approval of said system will be a subspace of the space $S_D$, namely,

$$S_{D|S_{CE}} = \bigcup_i D_{i|S_{CE}} \subseteq S_D \quad \text{where} \quad i=1,\dots,k \quad (2)$$

The *standards,* instead, are generally documents issued by one or more officially recognized bodies that draw up indications and restrictions for the production of a technical product. In particular, the standards can be divided into two categories:

- consultative standards, which provide indications on how to approach a problem correctly, for example regarding integration and use of a subsystem or a component in an interconnected system under examination; and
- operating standards, which provide specific indications on the procedures of type approval of a component and/or of a system, for example regarding the tests that it is necessary to carry out on the individual components of the system and on the system under examination.

Consequently, if $N_i$ is a standard, then it is possible to define the space of the standards $S_N$ as the set of all the possible consultative and operative standards present in a legislation as

$$S_N = \bigcup_i N_i \ , \quad \text{where} \quad i=1,\dots,n \quad (3)$$

The *specifications* are, instead, a collection or description of the set of standards that regulate all the problems linked to a technical product.

Consequently, if $C_i$ is a specification, the space of the specifications $S_C$ is defined as the set of all the possible specifications present in a legislation, namely,

$$S_C = \bigcup_i C_i \quad \text{where} \quad i=1,\dots,n \quad (4)$$

The *tests* can be defined as those experimental procedures that must be carried out on the individual components of the system and on the system under examination to verify whether each component of the system and the system itself meet given criteria defined in a *specification* $C_i$ of standardization derived from one or more *standards* $N_i$ forming part of a certain directive $D_i$.

Consequently, if $P_i$ is a test, then it is possible to define the test space $S_P$ as the set of all the possible tests present in a legislation, namely,

$$S_P = \bigcup_i P_i \quad \text{where} \quad i=1,\dots,n \quad (5)$$

Once the four main entities *(directives, standards, specifications,* and *tests)* involved in the procedure of type approval of an interconnected system have been defined, it is possible to define the *space of the standardization* and the fundamental relations between the entities involved. n particular, the *space of* the *standardization* $S_{NOR}$ is considered as the set comprising all the entities involved in the process of type approval, i.e., the union of the spaces of the *directives, standards, specifications,* and *tests:*

$$S_{NOR} = S_D \cup S_N \cup S_C \cup S_P \quad (6)$$

Once the *space of the standardization* $S_{NOR}$ has been defined, it is necessary to define reference operators that set in relation: the interconnected system under examination with the appropriate directives, the directives with the standards, the standards with the specifications, and the specification with the tests to be carried out.

The definition of a reference mathematical operator that sets in relation the interconnected system under examination with the appropriate directives represents the first step to be taken in the process of type approval of an interconnected system.

First of all it is, however, necessary to give a mathematical definition of the system for which to obtain type approval on the basis of the number of components that form part thereof, for example via the expression:

$$S_{CE} = \{CE_1, ..., CE_n\} \quad (7)$$

where $S_{CE}$ is the system for which to obtain type approval and $CE_1 ... CE_n$ are the components forming part of the system.

On the basis of the expressions (2) and (6) there is then defined the mathematical operator $\boldsymbol{R}_D$ of reference to the directives, which sets in relation the interconnected system under examination with the appropriate directives as

$$R_D : S_{CE} \mapsto \left\{D_1^{CE_1}, ..., D_j^{CE_1}, ..., D_1^{CE_k}, ..., D_w^{CE_k}\right\} = S_{D|S_{CE}} \quad (8)$$

where the subscripts *j and w* designate the directives corresponding to each component of the system.

For simplicity of treatment $S_{D|S_{CE}}$ will be referred to as $D_C = \{D_1, ..., D_n\}$, i.e., the set of the directives involved, and consequently the operator $\boldsymbol{R}_D$ can be written as

$$R_D : S_{CE} \mapsto D_C \quad (9)$$

Now, having defined the set of the directives, it is possible to define also the operator $\boldsymbol{R}_N$ of reference to the standards, which sets in relation the *directives* with the *standards.* If we call $N_C$ the set of the standards involved, the operator $\boldsymbol{R}_N$ is defined as

$$R_N : D_C \mapsto N_C \quad (10)$$

where, *if*$\forall D_{C_k} \exists N_i \Rightarrow D_{C_k} = \{N_1, ..., N_n\}$
and given that $D_C = \{D_1, ..., D_n\}$, then:

$$R_N : D_C = \{D_1, ..., D_n\} \mapsto \left\{N_1^{D_1}, ..., N_j^{D_1}, ..., N_1^{D_n}, ..., N_w^{D_n}\right\} = \{N_1, ..., N_t\} = N_C \quad (11)$$

Likewise, it is then possible to define the operator $\boldsymbol{R}_C$ of reference to the specifications, which sets in relation the *standards* with the *specifications.* If we call $C_C$ the set of the specifications involved, the operator $\boldsymbol{R}_C$ is defined as

$$R_C : N_C \mapsto C_C \qquad (12)$$

where $if \forall N_{C_k} \exists C_i \Rightarrow N_{C_k} = \{C_1,...,C_n\}$
and given that $N_C = \{N_1,...,N_n\}$, then:

$$R_C : N_C = \{N_1,...,N_n\} \mapsto \{C_1^{N_1},...,C_j^{N_1},...,C_1^{N_n},...,C_w^{N_n}\} = \{C_1,...,C_t\} = C_C \qquad (13)$$

Likewise, the operator $R_P$ of reference to the tests is defined, which sets in relation the *specifications* with the *tests.* If we call $P_C$ the set of the tests involved, the operator $R_P$ is defined as

$$R_P : C_C \mapsto P_C \qquad (14)$$

where $if \forall C_{C_k} \exists P_i \Rightarrow C_{C_k} = \{P_1,...,P_n\}$
and given that $C_C = \{C_1,...,C_n\}$, then:

$$R_P : C_C = \{C_1,...,C_n\} \mapsto \{P_1^{C_1},...,P_j^{C_1},...,P_1^{C_n},...,P_w^{C_n}\} = \{P_1,...,P_t\} = P_C \qquad (15)$$

On the basis of what has been said, it is consequently possible to define some fundamental relations between the spaces involved in the process of standardization.

In particular, defining the fundamental relation

$$S_P \subseteq S_c \subseteq S_N \subseteq S_D \qquad (16)$$

and, defining $P_{iC_j}$ as the i-th test of the j-th specification, it may be deduced that

$$S_C = \bigcup_j P_j = S_P \Rightarrow S_C \subseteq S_P \Rightarrow S_C \qquad (17)$$

is a finite covering of the test space.
To demonstrate the truth of said definition we shall define the j-th specification as

$$C_j = \bigcup_i P_{iC_j} \qquad (18)$$

Hence, on the basis of said definition, $S_C$ will be equal to

$$S_c = \bigcup_j C_j = \bigcup_j \bigcup_i P_{iC_j} = \bigcup_i \bigcup_j P_{iC_j} = \bigcup_i P_i = S_p \qquad (19)$$

Hence, from Eq. (14) and from Eq. (17) we have

$$a)\, S_P \subseteq S_C$$

$$b)\, S_C \subseteq S_P$$

and, more precisely

$$S_P \subseteq \bigcup_j C_j \qquad (20)$$

whence we infer that the space of the specifications is a finite covering for the test space.

The above reasoning can be repeated in a similar way to demonstrate the relation that links the *standards* to the *specifications* and the relation that links the *directives* to the *standards.*

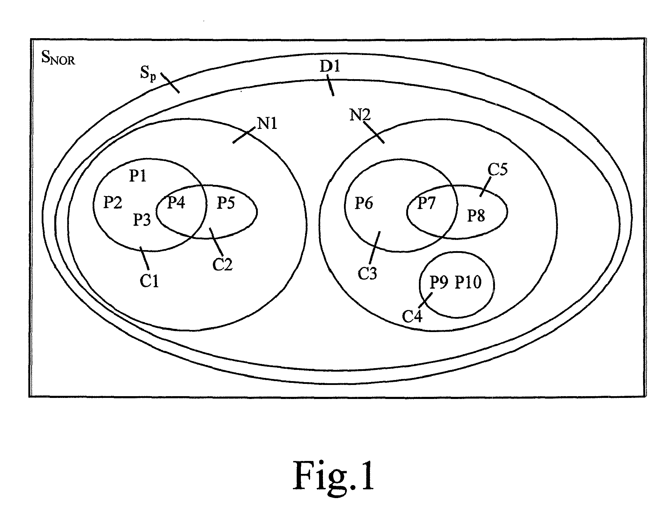

What has been said so far can be illustrated graphically as shown in Figure 1, which regards a set representation of entities involved in a process of standardization.

Having introduced the entities involved in the process of type approval of an interconnected system, for a better understanding of the present invention, there is now described a preferred embodiment, purely by way of non-limiting example and with reference to the annexed plate of drawings, wherein:

- Figure 2 shows a flowchart corresponding to a method for determining the complexity of a process of type approval of an interconnected system, according to the present invention; and
- Figure 3 shows an example of interconnected system for which it is desired to determine the complexity of the process of type approval.

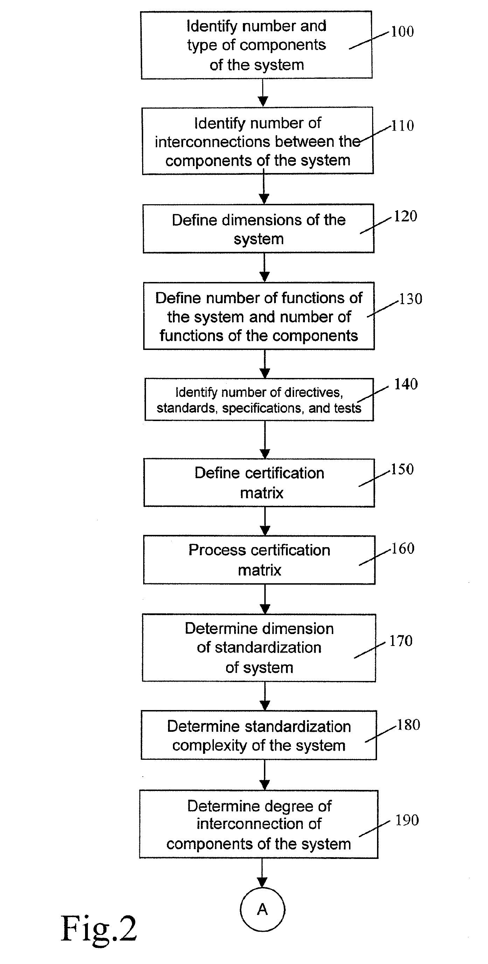

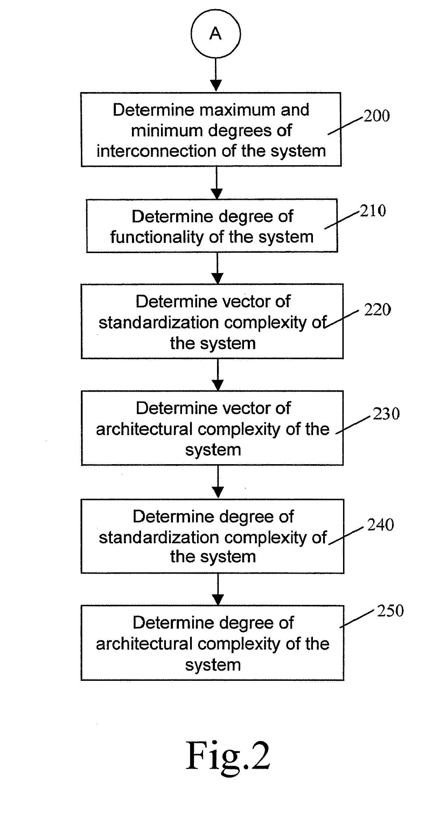

In particular, as shown by block 100 of Figure 2, in order to be able to determine the degree of standardization complexity of an interconnected system it is first of all necessary to define the interconnected system $S_{CE}$ on the basis of Eq. (6), identifying the number and type of the components that form part thereof.

Recalling once again that the standardization of the system is proportional to the characteristics of $S_{CE}$, and hence that the standardization of the system is a subspace of the standards, the process of standardization is not performed over the entire space but over the subspace generated by $S_{CE}$ on the basis of the reference operators $\boldsymbol{R}_D$, $\boldsymbol{R}_N$, $\boldsymbol{R}_C$ and $\boldsymbol{R}_P$.

Consequently, once the system $S_{CE}$ to be standardized has been defined as the set of components that form part thereof, in the case of an interconnected system it is necessary to take into consideration the link, i.e., the interconnection that exists between the various components of the system, as represented by block 110 of Figure 2.

For this purpose, it is useful to define an *operator of interconnection l* equal to

$$l \,|\, l(CE_i, CE_j) = l_{ij} : CE_i \leftrightarrow CE_j \qquad (21)$$

Eq. (21) states that there exists an operator $l_{ij}$ called operator of interconnection that correlates two components of the system under examination.

The importance of said operator lies in the fact that it enables description of the links that are present between the various components of the interconnected system without the need to detail the type of said links.

For completeness of treatment the concept of space of the interconnections, i.e., the space of all the possible links between all the possible components, is introduced as

$$L = \left\{ \bigcup_i l_i \right\} \mid \forall l_{xj} \Rightarrow l_{xj} \in L \quad (22)$$

where L is the space of the interconnections.

On the basis of Eq. (22) it is thus possible to define an interconnected system as the system that comprises at least two components connected to one another. Consequently, if:

$$\exists S_{CE} \mid S_{CE} = \{CE_1, \dots, CE_n\} \text{ with } n \geq 2,$$

and

$$\forall CE_i \exists CE_j \mid \exists l_{ij} : CE_i \leftrightarrow CE_j$$

then the system $S_{CE}$ is an interconnected system.

Formally, then, an interconnected system is a set of components and interconnections that can be expressed by the following notation:

$$S_{CE}^l = \{CE_1 \dots CE_n, l_{ij} \dots l_{kt}\} \quad (23)$$

where the superscript $l$ indicates precisely the existence of links between the components CE of the system and hence the interconnection.

Once the number of interconnections between the components of the system has been established, the dimensions of the system are defined on the basis of the number of components that form part thereof and on the basis of the number of interconnections between the components (block 120).

In particular, the dimensions of the system are defined via an operator # of cardinality of the set $S_{CE}^l$ itself:

$$Dim\left(S_{CE}^l\right) = \# S_{CE}^l \quad (24)$$

In order to define more precisely the architecture of the system, rather than have a single index of the dimension of the system comprising blocks and interconnections, it is better to have two distinct indices:

- 
$$\text{an index } D_{CE} = \# CE_i \mid CE_i \in S_{CE}^l \quad (25)$$

which defines the dimension of the components of the system as the number of components forming the system under examination; and

$$\text{an index } D_{\text{int}} = \# l_{ij} \mid l_{ij} \in S_{CE}^l \quad (26)$$

which defines the dimension of the interconnection of the system as the number of interconnections present between the components of the system.

After defining the dimensions of the system, the specific functions performed by the system, as well as the functions performed by each component of the system are identified and defined in block 130.

In particular, defined by $SF_i$ is a specific function to be performed by an interconnected system and by $F_i$ is a function performed by a component of the system.

If $SF_i$ is a specific function to be performed by the interconnected system under examination, then $S_{SF}$, which is the set of the specific functions to be performed by the entire system, is defined as

$$S_{SF} = \{SF_1,\ldots\ldots,SF_n\} \quad (27)$$

On the basis of Eq. (27) we therefore define as *operative content $C_{op}$* of an interconnected system the function that associates the set of the functions performed by the system:

$$C_{op}\left(S_{CE}^l\right) = \bigcup_i F_i \quad (28)$$

In particular, as may be noted from Eq. (28), the relation that links the *operative content $C_{op}$* with the set of the specific functions $S_{SF}$ to be performed by the system depends upon the functions performed by the individual components of the system. Consequently, defining by $F_i$ a function performed by a component of the system, a *function-link operator* is defined as

$$L_f : CE_i \rightarrow F_j \quad (29)$$

which associates to each component of the system the function or functions that it performs.

Eq. (29) allows us to introduce a wider concept, namely, the one regarding the function space $S_f$, which can be expressed by the equation:

$$\forall CE_i \exists F_j \mid \exists L_f : CE_i \rightarrow F_j \Rightarrow S_f = \bigcup_j F_j \quad (30)$$

whence it may be deduced that the *function-link operator $L_f$* operates between

$$L_f : S_{CE} \rightarrow S_f \quad (31)$$

Since it is very likely for a component of the system to perform a number of functions, it is convienient to treat the function space as vector space and the series of functions performed by a component of the system as *vector of the functions performed $V_f$*.

In particular, the *vector of the functions performed $V_f$* is equal to

$$V_f = (F_1, F_2, \ldots, F_n) \quad (32)$$

where $F_i$ assumes the value 0 if the component does not perform a specific function or else the value 1 if the component performs a specific function.

rom the consideration made on the function space $S_f$ and from the definition of Eq. (32) we find that the space $S_f$ is

$$S_f = \begin{pmatrix} V_{f_1} \\ \cdot \\ \cdot \\ \cdot \\ \cdot \\ V_{f_n} \end{pmatrix} \qquad (33)$$

where $V_{f_1} = (1,0...0),...,V_{f_n} = (0...0,1)$ .

Consequently, $V_{f_1} = (1,0...0),...,V_{f_n} = (0...0,1)$ is a base of the vector space $S_f$.

On the basis of what has been said so far, it is deduced that the overall functions performed by a single component $CE_i$ is the linear combination of the elements of the base of the vector space:

$$L_f(CE_i) = V_{f_{CE_i}} = cl V_{f_j} \quad \text{with } j=1...n \quad (34)$$

We can now pass on to the entire interconnected system $S_{CE}^l$ . Since the interconnected system is made up of a set of components that are in some way interconnected, then the functions performed by the entire system are

$$L_f(S_{CE}^l) = V_{f_{S_{ce}^l}} = cl V_{f_{CE_i}} \qquad (35)$$

Consequently, $V_{f_{S_{ce}^l}}$ is the vector expression of the operative content of the system under examination.

On the basis of what has been said, it is possible then to define the self-consistency of the interconnected system $S_{CE}^l$ via the relation:

$$S_{SF} \subseteq C_{op}\left(S_{CE}^l\right) \qquad (36)$$

From Eq. (36) it may be deduced that the system is self-consistent when the functions specified are a subset of the functions that the interconnected system is able to perform, i.e., of its *operative content* $C_{op}$.

Now, as illustrated in block 140 of Figure 2, it is necessary to identify the *directives, standards, specifications, and tests* involved in the process of standardization.

In particular, from an operative point of view, the entities involved in the process of standardization that require the largest amount of work and that present the greatest difficulties are the *specifications* and the *tests.*

In this connection, it is very useful to gather the *tests* and *specifications* on the basis of the definition of test space $S_P$, as defined in Eq. (5).

In particular, for this purpose, we can interpret the space $S_P$ as a vector space where the individual test $P_i$ is a vector comprising only a 1 in the *i*-th position and a plurality of 0's in the remaining positions. Consequently, if our test space has dimension n, then we shall find that

$$P_1 = (1,0,...,0), P_i = (0,...,0,1,0,...,0), P_n = (1,0,...,0) \quad (37)$$

is a base for the space Sp of the tests.

In particular, given a specification made up of a number of tests, on the basis of Eq. (37) it is possible to state that a specification $C_i$ is an appropriate linear combination of the tests $P_i$, namely,

$$C_i = lcP_i = lc(P_1,...,P_n) = (p_1,...,p_n) \quad (38)$$

Starting from the consideration that $C_c$ is the space of the specifications involved, i.e., a subspace of the specification space $S_C$, if said space is considered as a vector space, then from Eq. (38) it may be inferred that the specifications $C_i$ involved in the process of standardization are

$$C_c = \begin{pmatrix} C_1 \\ . \\ . \\ . \\ . \\ C_j \end{pmatrix} \quad (39)$$

where $j \leq n$ is the dimension of the space of the specifications.

Now, substituting in the expression (39) the expression of the specifications obtained from Eq. (38), we obtain a matrix that we shall call type-approval matrix, $M_{SCE}$.

$$M_{CE} = \begin{pmatrix} C_1 \\ . \\ . \\ . \\ C_n \end{pmatrix} = \begin{pmatrix} p_{11} & . & . & . & p_{1m} \\ . & . & . & & . \\ . & . & . & & . \\ . & . & . & & . \\ p_{n1} & . & . & . & p_{nm} \end{pmatrix} \quad (40)$$

The matrix $M_{SCE}$, from the way in which we have defined the tests $P_i$ and the specifications $C_i$ involved, is a more or less sparse matrix, the elements of which are equal to 0 when a test is not to be carried out and equal to 1 when a test is to be carried out, and in which the rows represent the specifications involved and the columns represent the tests involved.

Now, as illustrated in block 160, it is necessary to process the matrix $M_{SCE}$, eliminating all the columns where only 0's appear, in so far as said columns are related to tests not concerning the system under examination and are consequently useless for type approval.

The type-approval matrix will be designated by $M_{S^I_{CE}}$ in order to recall the fact that said matrix regards a particular interconnected system $S^I_{CE}$. We recall in fact that the subscript CE indicates that the system is to be certified and that the superscript $I$ indicates that the system under examination is of the interconnected type. A first consideration regards the operative importance that said matrix has in the process of standardization of an interconnected system. It enables in fact convenient identification of the tests to be carried out and of the specifications involved in the process of standardization and provides an indication of the complexity of the procedure of standardization, which depends directly upon the quantity of 1's present in the matrix.

On the basis of the type-approval matrix $M_{SICE}$ there is then determined the dimension of the standardization (block 170), which provides an indication of the amount of work that it is necessary to perform for certifying the system under examination. Recalling the characteristics of the type-approval matrix, i.e., Rows of $M_{SICE} \propto$ number of relevant specifications, Columns of $M_{SICE} \propto$ number of tests envisaged by a specification, the dimension $D_N$ of the standardization is defined as

$$D_N = \mathrm{Dim}(M_{S_{CE}}) = \mathrm{Max}\left\{\# \mathrm{Rows}(M_{S_{CE}}), \# \mathrm{Columns}(M_{S_{CE}})\right\} \quad (41)$$

Eq. (41) expresses that the amount of work that it is necessary to perform for type approval corresponds to the maximum between the number of rows or columns of the type-approval matrix. The reason for this is that "many rows and few columns" means many specifications to be considered but few tests to be carried out and a consequent "large" amount of work in order to meet all the specifications. Considering likewise the case of "many columns and few rows", this means few specifications to be considered and to trace but with many tests to carry out or get carried out by a suitably qualified person: in this case there is an obvious and burdensome commitment for satisfying all the tests required.

In particular, the dimension $D_N$ indicates only "how much" it is necessary to work for standardizing the system under examination, but does not provide any information regarding the "difficulty" of the process of standardization of the interconnected system under examination.

To establish the standardization complexity, designated by $C_{NS}$, it is necessary to make certain considerations. Intuitively, the complexity of standardization of the system depends to some extent upon the dimension of the system itself: the "larger" the system (made up of numerous subsystems and high level of articulation between them) and the higher the number of "differentiated" tests to be carried out, the higher the number of requirements and criteria to be met. We thus assume a relation that indicates the strict link between "complexity" (defined hereinafter) and dimension of the system, represented by the relation:

$$C_{NS} \leftrightarrow Dim\left\{S_{CE}^l\right\} \quad (42)$$

However, it should be pointed out that the relation (42) is not completely correct, since a system could be made up of many components that are, however, the same as one another, in which case there would be an "extensive" system but a low amount of work for carrying out standardization thereof and hence also a lower degree of difficulty. It follows that the standardization complexity, rather than depending upon the dimension of the system to be standardized, depends upon the dimension of the standardization of the system itself.

It is, consequently, necessary to find again a relation linked to the type-approval matrix $M_{SICE}$.

More precisely, if the dimension of the standardization is represented by the maximum number of rows or columns of the type-approval matrix, the standardization complexity will be represented by the rank of said matrix. In fact, the rank represents the number of linearly independent rows or columns. In the case in point, it means, then, the degree of diversification of the tests to be carried out. Consequently, "many differentiated tests" means high "complexity" in the process of standardization of the system. Intuitively, a system could have a "large" dimension of the standardization but, since it hypothetically has components with similar characteristics, a low diversification of the tests and hence a low complexity of type approval. Instead, an interconnected system could have a low dimension of the standardization but a high diversification of the tests and hence a high complexity of type approval at the level of amount of work to be carried out.

The standardization complexity of the system can then be defined by the equation:

$$C_{NS} = \rho(M_{S_{CE}}) \quad (43)$$

where $\rho(M_{SCE})$ is the rank of the matrix.

Once the standardization complexity of the system has been defined, it is necessary to analyse how the interconnection between the components of the system affects the process of standardization.

For this purpose, defined in block 190 is an operator of interconnection $l \mid l_{ij}$, defined as

$$l \mid l_{ij} = l(CE_i, CE_j) : CE_i \leftrightarrow CE_j \qquad (44)$$

Said operator identifies the interconnection between two components but, given a system formed by many components, it is necessary to identify a way whereby it is possible to represent all the interconnections between all the possible components. For this purpose, the concept of interconnection matrix is introduced. The interconnection matrix is a square matrix with a number of rows and columns equal to the number of components of the interconnected system under examination. A number $n_{ij}$ in the position $ij$ indicates then the relation that exists between block $i$ and block $j$. If $n_{ij}$ is 0, it means that the two blocks do not have interconnections; if instead $n_{ij} \geq 1$, it means that the two blocks have 1 or n links of interconnection. Consequently, given the interconnected system $S_{CE}^l = \{CE_1...CE_n, l_{ij}...l_{kt}\}$, the interconnection matrix is equal to:

$$
M_l = \begin{pmatrix}
l_{11} & . & . & . & l_{1n} \\
. & . & & & . \\
. & & . & & . \\
. & & & . & . \\
l_{n1} & . & . & . & l_{nn}
\end{pmatrix} \qquad (45)
$$

As may be noted, all the numbers that appear within the matrix have the property $n \in \mathbb{N}$. As has been defined, the matrix is always square and, consequently, if all the interconnections are considered as bidirectional (an assumption that is on the other hand valid in this treatment for the fact that it does not concern the mode of communication but only which blocks have a link), the matrix will be symmetrical with respect to the main diagonal (if the block $i$ has n links with the block $j$, then the block $j$ will have - bidirectionally - the same n links with the block $i$).

Consequently, on the basis of the above considerations, the interconnection matrix can be rewritten in the following form:

$$
M_l = \begin{pmatrix}
l_{11} & l_{12} & . & . & . & l_{1n} \\
 & . & . & & & . \\
 & & . & . & & . \\
 & & & . & . & . \\
 & & & & . & l_{n-1\,n} \\
 & & & & & l_{nn}
\end{pmatrix} \qquad (46)
$$

Taking now into consideration a single row k of said matrix, then, said row represents all the possible interconnections of the k-th system block. Thus defined as *interconnection vector* $V_{CE_k}$ of the block k is the k-th row of the interconnection matrix

$$V_{CE_k} = \left( l_{k1}, \ldots, l_{kn} \right) \quad (47)$$

Consequently, the *degree of interconnection* $G_{int}$ of the k-th block of the interconnected system is defined as

$$G_{int_K} = \left\| V_{CE_k} \right\| = \left[ \sum_{j=1}^{n} l_{kj}^2 \right]^{\frac{1}{2}} \quad (48)$$

i.e., as the normed vector $V_{CE_k}$, which represents how much the k-block of the interconnected system under examination is interconnected with the rest of the system itself.

Once the *degree of interconnection* $G_{int}$ of each component of the system under examination is defined, in block 200 the *maximum degree of interconnection* $\overline{G}_{int}(J)$ and *minimum degree of interconnection* $\underline{G}_{int}(J)$ of the entire system are defined.

In particular, the *maximum degree of interconnection* $\overline{G}_{int}(J)$ is equal to

$$\overline{G}_{int}(J) = \underset{1 \leq k \leq n}{Max} \left[ G_{int_K} \right] \quad (49)$$

where $J|G_{intK} = \overline{G}_{int}(J) \Rightarrow J$ is the index of the component (k-th row) with the maximum degree of interconnection, whilst the *minimum degree of interconnection* $\underline{G}_{int}(J)$ is equal to:

$$\underline{G}_{int}(J) = \underset{1 \leq k \leq n}{Min} \left[ G_{D int_K} \right] \quad (50)$$

where $I/G_{intK} = \underline{G}_{int}(I) \Rightarrow I$ is the index of the component (*k*-th row) with the minimum degree of interconnection.

*The maximum* and *minimum degrees of interconnection* provide an indication as regards the complexity of the system. In fact, if the *minimum degree of interconnection* has a "high" value, then we shall have a "highly interconnected" system that has a complex architecture, instead, if the *maximum degree of interconnection* is a "relatively low" value, then our system will be a system that is "poorly interconnected" and hence quite simple.

Once the *maximum* and *minimum degrees of interconnection* have been determined, in block 210 a quantity that indicates how many functions the system under examination is able perform is determined. In particular, said quantity is the *degree* $G_{fe}$ *of the functions performed by the system,* defined as the norm of the *vector* $V_f$ *of the functions performed by the system:*

$$G_{fe} = \left\| V_{f_{S_{ce}^l}} \right\| \quad (51)$$

In order to be able to determine at least one quantity that will provide an indication of the complexity of the process of standardization of the interconnected system under examination, it is necessary to create a link between the quantities involved in the process of standardization so far introduced. For this purpose, defined in blocks 220 and 230 are, respectively: a *vector of standardization complexity* $\overline{V}_{CNS}$ and a *vector of architectural complexity* $V_{CAS}$ of the system under examination.

In particular, the *vector of standardization complexity* $\overline{V}_{CNS}$ is defined on the basis of the *dimension of the standardization* $D_N$ and of the *standardization complexity* $C_{NS}$

$$\overline{V}_{CNS} = \left(D_N, C_{NS}\right) \quad (52)$$

whilst the *vector of architectural complexity* $\overline{V}_{CAS}$ is defined on the basis of the number of the components of the system $D_{CE}$, the number of the interconnections of system $D_{int}$ and of the *maximum degree of interconnection* $\overline{G}_{int}(J)$ and *minimum degree of interconnection* $\underline{G}_{int}(J)$ of the system

$$\overline{V}_{CAS} = \left(D_{CE}, D_{int}, \overline{G}_{int}(J), \underline{G}_{int}(J)\right) \quad (53)$$

On the basis of the *vector of standardization complexity* $\overline{V}_{CNS}$, in block 240 the *degree* $G_{CNS}$ *of standardization complexity* of the system under examination is then determined. Said quantity is determined as the norm of the *vector of standardization complexity* $\overline{V}_{CNS}$

$$G_{CNS} = \left\| \overline{V}_{CNS} \right\| \quad (54)$$

and provides a clear and precise indication of the complexity of the process that leads to standardization of the interconnected system under examination.

In addition to the *degree of standardization complexity* $G_{CNS}$ of the system under examination, it is possible to determine in a similar way a further quantity that provides an indication as regards the complexity of the process of standardization of the interconnected system under examination, i.e., the degree $G_{CAS}$ *of architectural complexity* of the system, which is determined as the norm of the *vector of architectural complexity* $\overline{V}_{CAS}$:

$$G_{CAS} = \left\| \overline{V}_{CAS} \right\| \quad (55)$$

As may be noted from Eqs. (54) and (55), the *degree* $G_{CNS}$ *of standardization complexity* and the *degree* $G_{CAS}$ *of architectural complexity* are simply numbers, which, in order to be able to provide useful information on the complexity of the process of standardization of the interconnected system under examination must necessarily be compared with reference values, such as for example pre-set normed values, or else values calculated for an interconnected system that is equivalent from the functional standpoint to the one being examined, obtained by substituting one or more components in the interconnected system under examination.

In particular, it is possible to obtain an indication with high information content as regards the complexity of the process of verification of the normative compliance of an interconnected system by comparing with one another the respective *degrees* $G_{CNS}$ *of standardization complexity* and *degrees* $G_{CAS}$ *of architectural complexity* calculated for configurations different from the architectural standpoint but equivalent from the functional standpoint of the interconnected system for which it is desired to obtain type approval.

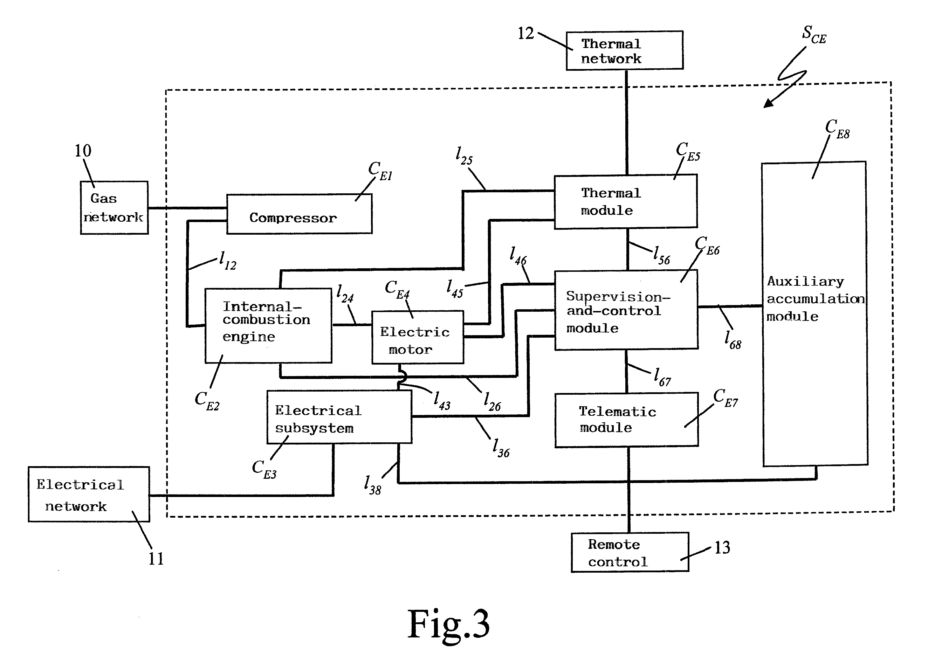

On the basis of the theoretical-mathematical treatment described above, the method of the present invention is described hereinafter with reference to an interconnected system for the cogeneration of electrical energy and heat, as illustrated in Figure 3, without this implying any loss of generality.

In particular, designated by $S_{CE}$ in Figure 3 is an interconnected system for cogeneration of electrical energy and heat comprising: a compressor $C_{E1}$, a high-pressure internal-combustion engine $C_{E2}$, an electric motor $C_{E3}$, an electric subsystem $C_{E4}$, a thermal module $C_{E5}$, a telematic module $C_{E6}$, a supervision-and-control module $C_{E7}$, and an auxiliary module $C_{E8}$ for the accumulation of electrical energy, for example, batteries.

In particular, the compressor $C_{E1}$ is connected to a gas-supply network 10 and is interconnected via an interconnection line $I_{12}$ with the internal-combustion engine $C_{E2}$ which is in turn connected to the electric motor $C_{E4}$ via an interconnection line $I_{24}$, to the thermal module $C_{E5}$ via an interconnection line $I_{25}$, and to the supervision-and-control module $C_{E6}$ via an interconnection line $I_{26}$. The electric motor $C_{E4}$ is connected to the electric subsystem $C_{E3}$ (for example, a transformer) via an interconnection line $I_{43}$, to the thermal module $C_{E5}$ via an interconnection line $I_{45}$, to the supervision-and-control module $C_{E6}$ via an interconnection line $I_{46}$.

The electric subsystem $C_{E3}$ is connected to a electrical network 11, external to the system $S_{CE}$, to which it supplies the electrical energy produced by the cogeneration system $S_{CE}$. In particular, the electric subsystem $C_{E3}$ is connected to the supervision-and-control module $C_{E6}$ via an interconnection line $l_{36}$ and to the auxiliary module $C_{E8}$ for the accumulation of electrical energy via an interconnection line $l_{38}$.

Furthermore, the supervision-and-control module $C_{E6}$ is connected to the thermal module $C_{E5}$ via an interconnection line $l_{65}$, to the telematic module $C_{E7}$ via an interconnection line $l_{67}$, and to the auxiliary module $C_{E8}$ for the accumulation of electrical energy via an interconnection line $l_{68}$.

The thermal module $C_{E5}$ is in turn connected to a thermal network 12, external to the system $S_{CE}$, to which it supplies the thermal energy produced by the cogeneration system $S_{CE}$.

The telematic module $C_{E7}$ is in turn connected to a telecontrol system 13 through which remote control of the system $S_{CE}$ is possible.

As described in the theoretical-mathematical treatment, for determining the complexity of the process of standardization of the system of Figure 2, it is first of all necessary to define the system $S_{CE}$ on the basis of its components, i.e., in the case of the system $S_{CE}$ of Figure 2:

- the compressor $C_{E1}$
- the internal-combustion engine $C_{E2}$,
- the electric motor $C_{E3}$,
- the electric subsystem $CE_4$,
- the thermal module $CE_5$,
- the telematic module $CE_7$,
- the supervision-and-control module $CE_6$, and
- the auxiliary accumulation module $CE_8$.

Consequently, the system $S_{CE}$ is given by

$$S_{CE} = \{CE_1, CE_2, CE_3, CE_4, CE_5, CE_6, CE_7, CE_8\}$$

After having defined the system $S_{CE}$, the number of interconnections between the components of the system $S_{CE}$ is identified, and the interconnections are grouped together so as to form the expression (22).

In particular, as emerges from Figure 2, the system $S_{CE}$ has twelve connections, i.e.,: $l_{12}$, $l_{25}$, $l_{45}$, $l_{46}$, $l_{26}$, $l_{36}$, $l_{24}$, $l_{43}$, $l_{38}$, $l_{65}$, $l_{68}$, $l_{67}$.

Grouping together the twelve interconnections identified in Eq. (6) we obtain:

$$S_{CE}^{l} = \{CE_1, CE_2, CE_3, CE_4, CE_5, CE_6, CE_7, CE_8, l_{12}, l_{25}, l_{35}, l_{36}, l_{26}, l_{46}, l_{23}, l_{34}, l_{48}, l_{56}, l_{68}, l_{67}\}$$

whence it may be seen how, given that the number of components of the system $S_{CE}$ is greater than two and since there exist links between them, the system is interconnected.

On the basis of the expression (22), it is possible then to determine the dimensions of the system $S_{CE}$. In particular, since the components of the system $S_{CE}$ are eight and the interconnections between them are twelve, it follows that the *dimension Dim* of the system $S_{CE}$ is

$$D_N = \dim(M_{S_{CE}}) = 8$$

$$C_{NS} = \rho(M_{S_{CE}}) = 12$$

$$Dim\left(S_{CE}^l\right)=\# S_{CE}^l=8+12\ =\ 20$$

After the dimensions *Dim* of the system $S_{CE}$ have been defined, the specific functions to be performed by the interconnected system $S_{CE}$ are identified, as well as its *operative content $C_{op}$*.
In particular, the cogeneration system $S_{CE}$ of Figure 2 performs two specific functions; namely:

- a function $SF_1$ corresponding to the supply of electrical energy in the network or to the loads; and
- a function $SF_2$ corresponding to the supply of thermal energy, for example hot water for canteen and heating purposes.

Consequently, the set of the specific functions to be performed by the system can be summed up in the expression

$$S_{SF} = \{SF_1, SF_2\}$$

Furthermore, by analysing the cogeneration system $S_{CE}$ under examination, the following functions performed within it by the interaction of its components may be identified:

- production of mechanical energy: $F_1$
- production of thermal energy: $F_2$
- production of electrical energy: $F_3$
- supervision and control of the components: $F_4$
- accumulation of electrical energy: $F_5$

Consequently, the *operative content $C_{op}$* of the system is

$$C_{op}\left(S_{CE}^l\right)= \{F_1, F_2, F_3, F_4, F_5\}$$

and, consequently, the vector of functions performed is

$$V_{f_{S_{ce}^l}} = \begin{pmatrix} 1 & 1 & 1 & 1 & 1 \end{pmatrix}$$

From a comparison between $S_{SF}$ and the operative content $C_{op}$, it emerges that, since the functions $S_{F1}$ and $S_{F2}$ are a subset of the functions $F_1$, $F_2$, $F_3$, $F_4$ and $F_5$ that the interconnected system is able to perform, i.e., of its *operative content* $C_{op}$ ( $S_{SF} \subseteq C_{op}\left(S_{CE}^l\right)$ ) , it may be inferred that the system is of a self-consistent type.

At this point, applying the reference operators, the *directives $D_C$,* the *standards $N_C$,* the *specifications $C_C$,* and the *tests $P_C$* involved in the procedure of type approval of the system $S_{CE}$ are identified.
In particular, the *directives $D_C$* involved ($R_D : S_{CE} \mapsto D_C$) are:

$D_C$: {Machine directive 98/37, Low-voltage directive 73/23, EMC directive 89/336, PED directive 97/23}
Consequently, if we call:

$D_1$: *Machine directive 98/37,*
$D_2$: *Low-voltage directive 73/23,*
$D_3$: *EMC directive 89/336, and*

$D_4$: *PED directive 97/23;*

we find that

$$D_C = \{ \ D_1, \ D_2, \ D_3, \ D_4 \}$$

The standards $N_C$ involved ($R_N$:$D_C \mapsto N_C$) are instead:

$N_C$:{*UNI EN 292-1 Standard, UNI EN 292-2 Standard, UNI EN ISO 3477:1977 Standard, ISO 8528-10:1998 Standard, UNI EN ISO 1076:1999 Standard, Internal test procedure, Engine type approval according to 88/77/EEC Directive* to *2001/27/EC Directive, ISO 8178-4 Standard, EN 60204-1 Standard, CEI 44-5, CEI 64-8, EN 55011 (1999), EN 61000-4-2 (1996), EN 61000-4-6 (1997)*}
Consequently, if we call:

$N_1$: *UNI EN 292-1 Standard,*
$N_2$: *UNI EN 292-2 Standard,*
$N_3$: *UNI EN ISO 3477:1977 Standard,*
$N_4$: *ISO 8528-10:1998 Standard,*
$N_5$: *UNI EN ISO 1076:1999 Standard,*
$N_6$: *Internal test procedure,*
$N_7$: *Engine type approval according* to *88/77/EEC Directive* to *2001/27/EC Directive,*
$N_8$: *ISO 8178-4 Standard,*
$N_9$: *EN 60204-1 Standard,*
$N_{10}$: *CEI 44-5,*
$N_{11}$: *CEI 64-8,*
$N_{12}$: *EN 55011 (1999),*
$N_{13}$: *EN 61000-4-2 (1996),*
$N_{14}$: *EN 61000-4-6 (1997),*
we obtain

$$N_C = \{ \ N_1, \ N_2, \ N_3, \ N_4, \ N_5, \ N_6, \ N_7, \ N_8, \ N_9, \ N_{10}, \ N_{11}, \ N_{12}, \ N_{13}, \ N_{14} \}$$

The *specifications $C_C$* involved ($R_C : N_C \mapsto C_C$) are instead:

$C_C$:{*Acoustics, vibrations, Exhaust-gas emissions, Safety, Electrical equipment/system, EMC*}
Consequently, if we call

$C_1$: *Acoustics,*
$C_2$: *Vibrations,*
$C_3$: *Exhaust-gas emissions,*
$C_4$: *Safety,*
$C_5$: *Electrical equipment/system,*
$C_6$: *EMC,*

we obtain

$$C_C = \{ C_1, \ C_2, \ C_3, \ C_4, \ C_5, \ C_6 \}$$

The *tests $P_C$* involved ($R_P$:$C_C \mapsto P_C$) (derived from the *Standards $N_C$* and from the *Specifications $C_C$*) are instead:

$P_1$: *UNI EN ISO 3477:1977* Standard corresponding to:

Acoustics - Determination of the levels of sound power of the sources of noise by means of sound pressure and technical method of design in a basically free field on a reflecting plane;
$P_2$: *ISO 8528-10:1998 Standard* corresponding to:

Reciprocating internal-combustion engines coupled to alternators for the generation of electrical energy. Part 10:

Measurement of the noise dispersed in the air through the method with envelope surface;

$P_3$: *UNI EN ISO 1076:1999 Standard* corresponding to:

Mechanical vibrations - Tests on fixed machines for determining the emissions of the vibrations transmitted to the entire body;

$P_4$: *Internal test procedure,* corresponding to:

Internally established test with corresponding results;

$P_5$: *Engine type approval according* to *88/77/EEC Directive* to *2001/27/EC Directive,* corresponding to:

Test cycles for CE type approval;

$P_6$: *ISO 8178-4 Standard,* corresponding to:

Reciprocating internal-combustion engines, Measurement of exhaust emissions, Test cycles for different applications of the engines.

$P_7$: *EN 55011 (1999),* corresponding to:

Emissions conducted in a.c. from 150 kHz to 30 MHz (industrial environment);

$P_8$: *EN 61000-4-2 (1996)* corresponding to:

Immunity to the electrostatic discharge (ESD);

$P_9$: *EN 61000-4-6* (1997) corresponding to:

Immunity to conducted disturbance, induced by radiofrequency fields (injection of common-mode RF current);

$P_{10}$: *UNI EN 292-1 Standard, UNI EN 292-2 Standard, EN 60204-1, CEI* 44-5, *CEI* 64-8, corresponding to technical verifications.

In particular, the test $P_{10}$ comprises a plurality of tests from $P_{10.1}$ to $P_{10.8}$ regarding, respectively: starting tests, electrical tests, HMI tests, safety tests, chemical tests, vibroacoustic tests, structural tests, and mechanical tests. Consequently, we obtain:

$$P_C = \{\ P_1,\ P_2,\ P_3,\ P_4,\ P_5,\ P_6,\ P_7,\ P_8,\ P_9,\ P_{10.1},\ P_{10.2},\ P_{10.3},\ P_{10.4},\ P_{10.5},\ P_{10.6},\ P_{10.7},\ P_{10.8}\ \}.$$

On the basis of the space $C_C$ of the specifications and of the space $P_C$ of the tests, there is then determined the type-approval matrix $M_{SCE}$.
In particular, if the space $P_C$ of the tests is considered as vector space, we obtain:

$$P_1 = (1,0,0,0,0,0,0,0,0,0,0,0,0,0,0,0,0),$$

$$P_2 = (0,1,0,0,0,0,0,0,0,0,0,0,0,0,0,0,0),$$

$$P_3 = (0,0,1,0,0,0,0,0,0,0,0,0,0,0,0,0,0),$$

$$P_4 = (0,0,0,1,0,0,0,0,0,0,0,0,0,0,0,0,0),$$

$$P_5 = (0,0,0,0,1,0,0,0,0,0,0,0,0,0,0,0,0),$$

$$P_6 = (0,0,0,0,0,1,0,0,0,0,0,0,0,0,0,0,0),$$

$$P_7 = (0,0,0,0,0,0,1,0,0,0,0,0,0,0,0,0,0),$$

$$P_8 = (0,0,0,0,0,0,0,1,0,0,0,0,0,0,0,0,0),$$

$$P_9 = (0,0,0,0,0,0,0,0,1,0,0,0,0,0,0,0,0),$$

$$P_{10.1} = (0,0,0,0,0,0,0,0,0,1,0,0,0,0,0,0,0),$$

$$P_{10.2} = (0,0,0,0,0,0,0,0,0,0,1,0,0,0,0,0,0),$$

$$P_{10.3} = (0,0,0,0,0,0,0,0,0,0,0,1,0,0,0,0,0),$$

$$P_{10.4} = (0,0,0,0,0,0,0,0,0,0,0,0,1,0,0,0,0),$$

$$P_{10.5} = (0,0,0,0,0,0,0,0,0,0,0,0,0,1,0,0,0),$$

$$P_{10.6} = (0,0,0,0,0,0,0,0,0,0,0,0,0,0,1,0,0),$$

$$P_{10.7} = (0,0,0,0,0,0,0,0,0,0,0,0,0,0,0,1,0),$$

$$P_{10.8} = (0,0,0,0,0,0,0,0,0,0,0,0,0,0,0,0,1);$$

At this point, a verification is made to establish which of the tests $P_C$ form part of the specifications involved $C_C$. For this purpose, the tests that form part of the specification involved are distinguished by 1, and those that do not form part thereof are distinguished by 0.

In this way we obtain

$C_1$= $P_1$*1+ $P_2$*1+ $P_3$*0+ $P_4$*0+ $P_5$*0+ $P_6$*0+ $P_7$*0+ $P_3$*0+ $P_9$*0+ $P_{10.1}$*0+ $P_{10.2}$*0+ $P_{10.3}$*0+ $P_{10.4}$*0+ $P_{10.5}$*0+ $P_{10.6}$*1+ $P_{10.7}$*0+ $P_{10.8}$*0 = $\Rightarrow$ (1,1,0,0,0,0,0,0,0,0,0,0,0,0,1,0,0)

$C_2$= $P_1$*0+ $P_2$*0+ $P_3$*1+ $P_4$*0+ $P_5$*0+ $P_6$*0+ $P_7$*0+ $P_8$*0+ $P_9$*0+ $P_{10.1}$*0+ $P_{10.2}$*0+ $P_{10.3}$*0+ $P_{10.4}$*0+ $P_{10.5}$*0+ $P_{10.6}$*1+ $P_{10.7}$*0+ $P_{10.8}$*0 = $\Rightarrow$ (0,0,1,0,0,0,0,0,0,0,0,0,0,0,1,0,0)

$C_3$= $P_1$*0+ $P_2$*0+ $P_3$*0+ $P_4$*1+ $P_5$*1+ $P_6$*1+ $P_7$*0+ $P_8$*0+ $P_9$*0+ $P_{10.1}$*0+ $P_{10.2}$*0+ $P_{10.3}$*0+ $P_{10.4}$*0+ $P_{10.5}$*0+ $P_{10.6}$*0+ $P_{10.7}$*0+ $P_{10.8}$*0 = $\Rightarrow$ (0,0,0,1,1,1,0,0,0,0,0,0,0,0,0,0,0)

$C_4$= $P_1$*0+ $P_2$*0+ $P_3$*0+ $P_4$*0+ $P_5$*0+ $P_6$*0+ $P_7$*0+ $P_8$*0+ $P_9$*0+ $P_{10.1}$*1+ $P_{10.2}$*1+ $P_{13.3}$*0+ $P_{10.4}$*1+ $P_{10.5}$*1+ $P_{10.6}$*1+ $P_{10.7}$*0+ $P_{10.8}$*0 = $\Rightarrow$ (0,0,0,0,0,0,0,0,0,1,1,0,1,1,1,0,0)

$C_5$= $P_1$*0+ $P_2$*0+ $P_3$*0+ $P_4$*0+ $P_5$*0+ $P_6$*0+ $P_7$*0+ $P_8$*0+ $P_9$*0+ $P_{10.1}$*0+ $P_{10.2}$*1+ $P_{10.3}$*0+ $P_{10.4}$*0+ $P_{10.5}$*0+ $P_{10.6}$*1+ $P_{10.7}$*0+ $P_{10.8}$*0 = $\Rightarrow$ (0,0,0,0,0,0,0,0,0,0,1,0,0,0,0,0,0)

$C_6$= $P_1$*0+ $P_2$*0+ $P_3$*0+ $P_4$*0+ $P_5$*0+ $P_6$*0+ $P_7$*1+ $P_8$*1+ $P_9$*1+ $P_{10.1}$*0+ $P_{10.2}$*0+ $P_{10.3}$*0+ $P_{10.4}$*0+ $P_{10.5}$*0+ $P_{10.6}$*0+ $P_{10.7}$*0+ $P_{13.8}$*0 = $\Rightarrow$ (0,0,0,0,0,0,1,1,1,0,0,0,0,0,0,0,0)

By organizing the specifications from $C_1$ to $C_6$ in the type-approval matrix $M_{SCE}$ we obtain:

$$M_{CE} = \begin{pmatrix} C_1 \\ C_2 \\ C_3 \\ C_4 \\ C_5 \\ C_6 \end{pmatrix} = \begin{pmatrix} 1 & 1 & 0 & 0 & 0 & 0 & 0 & 0 & 0 & 0 & 0 & 0 & 0 & 0 & 1 & 0 & 0 \\ 0 & 0 & 1 & 0 & 0 & 0 & 0 & 0 & 0 & 0 & 0 & 0 & 0 & 0 & 1 & 0 & 0 \\ 0 & 0 & 0 & 1 & 1 & 1 & 0 & 0 & 0 & 0 & 0 & 0 & 0 & 0 & 0 & 0 & 0 \\ 0 & 0 & 0 & 0 & 0 & 0 & 0 & 0 & 0 & 1 & 1 & 0 & 1 & 1 & 1 & 0 & 0 \\ 0 & 0 & 0 & 0 & 0 & 0 & 0 & 0 & 0 & 0 & 1 & 0 & 0 & 0 & 0 & 0 & 0 \\ 0 & 0 & 0 & 0 & 0 & 0 & 1 & 1 & 1 & 0 & 0 & 0 & 0 & 0 & 0 & 0 & 0 \end{pmatrix}$$

Eliminating from the type-approval matrix $M_{SCE}$ the columns of just zeros we obtain:

$$M_{CE} = \begin{pmatrix} 1 & 1 & 0 & 0 & 0 & 0 & 0 & 0 & 0 & 0 & 0 & 0 & 0 & 1 \\ 0 & 0 & 1 & 0 & 0 & 0 & 0 & 0 & 0 & 0 & 0 & 0 & 0 & 1 \\ 0 & 0 & 0 & 1 & 1 & 1 & 0 & 0 & 0 & 0 & 0 & 0 & 0 & 0 \\ 0 & 0 & 0 & 0 & 0 & 0 & 0 & 0 & 0 & 1 & 1 & 1 & 1 & 1 \\ 0 & 0 & 0 & 0 & 0 & 0 & 0 & 0 & 0 & 0 & 1 & 0 & 0 & 0 \\ 0 & 0 & 0 & 0 & 0 & 0 & 1 & 1 & 1 & 0 & 0 & 0 & 0 & 0 \end{pmatrix}$$

From the type-approval matrix $M_{SCE}$ it is possible to obtain

-  the dimension $D_N$ of the standardization, namely,

$$D_N = \mathrm{Dim}(M_{S_{CE}}) = \mathrm{Max}\{\#\,\mathrm{Rows}(M_{S_{CE}}), \#\,\mathrm{Columns}(M_{S_{CE}})\} = 14$$

corresponding to the number of columns of the matrix $M_{SCE}$ ; and
-  the standardization complexity $C_{NS}$:

$$C_{NS} = \rho(M_{S_{CE}}) = 6$$

corresponding to the rank of the matrix $M_{SCE}$.

After the dimension $D_N$ and the complexity $C_{NS}$ of the standardization have been determined, the interconnection matrix $M_1$ is determined, which, we recall, is a square matrix with a number of rows and columns equal to the number of components of the interconnected system under examination, i.e.,

$$M_l = \begin{pmatrix} 0 & 1 & 0 & 0 & 0 & 0 & 0 & 0 \\ 1 & 0 & 1 & 0 & 1 & 1 & 0 & 0 \\ 0 & 1 & 0 & 1 & 1 & 1 & 0 & 0 \\ 0 & 0 & 1 & 0 & 0 & 1 & 0 & 1 \\ 0 & 1 & 1 & 0 & 0 & 1 & 0 & 0 \\ 0 & 1 & 1 & 1 & 1 & 1 & 1 & 1 \\ 0 & 0 & 0 & 0 & 0 & 1 & 0 & 0 \\ 0 & 0 & 0 & 1 & 0 & 1 & 0 & 0 \end{pmatrix}$$

From the interconnection matrix $M_1$ we obtain the following interconnection vectors for each component of the system $S_{CE}$:

$$V_{CE1} = (0,1,0,0,0,0,0,0)$$

$$V_{CE2} = (1,0,1,0,1,1,0,0)$$

$$V_{CE3} = (0,1,0,1,1,1,0,0)$$

$$V_{CE4} = (0,0,1,0,0,1,0,1)$$

$$V_{CE5} = (0,1,1,0,0,1,0,0)$$

$$V_{CE6} = (0,1,1,1,1,1,1,1)$$

$$V_{CE7} = (0,0,0,0,0,1,0,0)$$

$$V_{CE8} = (0,0,0,1,0,1,0,0)$$

For each of the vectors listed above there is then calculated the respective degree of interconnection of the component, i.e.,

$$G_{\text{int}_1} = \left\| V_{CE_1} \right\| = \left[0^2 + 1^2 + 0^2 + 0^2 + 0^2 + 0^2 + 0^2 + 0^2\right]^{\frac{1}{2}} = 1$$

$$G_{\text{int}2} = \left\| V_{CE_2} \right\| = \left[ 1^2 + 0^2 + 1^2 + 0^2 + 1^2 + 1^2 + 0^2 + 0^2 \right]^{\frac{1}{2}} = 2$$

$$G_{int3} = \left\| V_{CE_3} \right\| = \left[ 0^2 + 1^2 + 0^2 + 1^2 + 1^2 + 1^2 + 0^2 + 0^2 \right]^{\frac{1}{2}} = 2$$

$$G_{int_4} = \left\| V_{CE_4} \right\| = \left[ 0^2 + 0^2 + 1^2 + 0^2 + 0^2 + 1^2 + 0^2 + 1^2 \right]^{\frac{1}{2}} = 3^{\frac{1}{2}} \cong 1.73$$

$$G_{int_5} = \left\| V_{CE_5} \right\| = \left[ 0^2 + 1^2 + 1^2 + 0^2 + 0^2 + 1^2 + 0^2 + 0^2 \right]^{\frac{1}{2}} = 3^{\frac{1}{2}} \cong 1.73$$

$$G_{int_6} = \left\| V_{CE_6} \right\| = \left[ 0^2 + 1^2 + 1^2 + 1^2 + 1^2 + 1^2 + 1^2 + 1^2 \right]^{\frac{1}{2}} = 7^{\frac{1}{2}} \cong 2.65$$

$$G_{\text{int}7} = \left\| V_{CE_7} \right\| = \left[ 0^2 + 0^2 + 0^2 + 0^2 + 0^2 + 1^2 + 0^2 + 0^2 \right]^{\frac{1}{2}} = 1$$

$$G_{int_8} = \left\| V_{CE_8} \right\| = \left[ 0^2 + 0^2 + 0^2 + 1^2 + 0^2 + 1^2 + 0^2 + 0^2 \right]^{\frac{1}{2}} = 2^{\frac{1}{2}} \cong 1.41$$

On the basis of the degrees of interconnection calculated above, the *maximum degree of interconnection* $\overline{G}_{\text{int}}$ (*J*) *and minimum degree of interconnection* $\underline{G}_{\text{int}}(J)$ are then determined, namely,

$$\overline{G}_{int}(J) = \underset{1 \le k \le n}{Max}\left[ G_{int_K} \right] = G_{int}\ (6) = 2.65 \ ,$$

and

$$\underline{G}_{\text{int}}(J) = \underset{1 \le k \le n}{Min}\left[ G_{\text{int}_K} \right] = G_{\text{int}}\ (1) = G_{\text{int}}\ (7) = 1$$

respectively, for:

- the supervision-and-control module $C_{E6}$, which is thus the component of the system $S_{CE}$ with the largest number of interconnections; and
- the compressor $C_{E1}$ and the telematic module $C_{E7}$, which, as may be noted from Figure 2, are the components of the system with the smallest number of interconnections.

On the basis of the maximum degree of interconnection and minimum degree of interconnection the *degree $G_{fe}$ of the functions performed* by the system is determined, defined as the norm of the *vector $V_f$ of the functions performed* by the cogeneration system, namely,

$$G_{fe} = \left(1^2 + 1^2 + 1^2 + 1^2 + 1^2\right)^{\frac{1}{2}} = 5^{\frac{1}{2}} = 2.23$$

Consequently, the *vector of standardization complexity $V_{CNS}$* and the *vector of architectural complexity $\overline{V}_{CAS}$* are equal to

$$\overline{V}_{CNS} = \left(D_{CE}, D_{int}, D_N, C_{NS}, \overline{G}_{int}(J), \underline{G}_{int}(J)\right) = (14,6)$$

$$\overline{V}_{CAS} = \left(D_{CE}, D_{int}, \overline{G}_{int}(J), \underline{G}_{int}(J)\right) = (8, 12, 2.65, 1)$$

whence it is possible to derive the *degree of standardization complexity $G_{CNS}$* and the *degree of architectural complexity $G_{CAS}$*

$$G_{CNS} = \left\|\overline{V}_{CNS}\right\| = 15.23$$

$$G_{CAS} = \left\|\overline{V}_{CAS}\right\| = 14.70$$

As discussed at the end of the theoretical-mathematical treatment, the *degree $G_{CNS}$ of standardization complexity* and the *degree $G_{CAS}$ of architectural complexity* calculated for the cogeneration system under examination provide useful information on the complexity of the process of standardization of the cogeneration system only if compared with reference values.

Consequently, in order to obtain said reference values, there will be hereinafter calculated the *degree $G_{CNS}$ of standardization complexity* and the *degree $G_{CAS}$ of architectural complexity* of a plurality of systems similar to that of Figure 2 from the functional standpoint, i.e., with the same operative content, but with some different components $C_E$.

We shall suppose, for example, substituting in the system $S_{CE}$ of Figure 2 the auxiliary module $C_{E8}$ for accumulation of electrical energy with a fly-wheel. Said substitution would require the modification of some *specifications $C_C$* involved in the process of standardization, in so far as it would no longer be necessary to carry out the tests of a chemical type of the batteries, which would be replaced by tests of a vibroacoustic, structural and mechanical type necessary for testing the functionality of the fly-wheel.

Consequently, to take into account said difference it is necessary to modify the type-approval matrix, which consequently assumes the form:

$$M_{CE} = \begin{pmatrix} 1 & 1 & 0 & 0 & 0 & 0 & 0 & 0 & 0 & 0 & 0 & 0 & 0 & 0 & 1 & 0 & 0 \\ 0 & 0 & 1 & 0 & 0 & 0 & 0 & 0 & 0 & 0 & 0 & 0 & 0 & 0 & 1 & 0 & 0 \\ 0 & 0 & 0 & 1 & 1 & 1 & 0 & 0 & 0 & 0 & 0 & 0 & 0 & 0 & 0 & 0 & 0 \\ 0 & 0 & 0 & 0 & 0 & 0 & 0 & 0 & 0 & 1 & 1 & 0 & 1 & 0 & 1 & 1 & 1 \\ 0 & 0 & 0 & 0 & 0 & 0 & 0 & 0 & 0 & 0 & 0 & 1 & 0 & 0 & 0 & 0 & 0 \\ 0 & 0 & 0 & 0 & 0 & 0 & 1 & 1 & 1 & 0 & 0 & 0 & 0 & 0 & 0 & 0 & 0 \end{pmatrix}$$

and, once simplified becomes:

$$M_{CE} = \begin{pmatrix} 1 & 1 & 0 & 0 & 0 & 0 & 0 & 0 & 0 & 0 & 0 & 0 & 1 & 0 & 0 \\ 0 & 0 & 1 & 0 & 0 & 0 & 0 & 0 & 0 & 0 & 0 & 0 & 1 & 0 & 0 \\ 0 & 0 & 0 & 1 & 1 & 1 & 0 & 0 & 0 & 0 & 0 & 0 & 0 & 0 & 0 \\ 0 & 0 & 0 & 0 & 0 & 0 & 0 & 0 & 0 & 1 & 1 & 1 & 1 & 1 & 1 \\ 0 & 0 & 0 & 0 & 0 & 0 & 0 & 0 & 0 & 0 & 1 & 0 & 0 & 0 & 0 \\ 0 & 0 & 0 & 0 & 0 & 0 & 1 & 1 & 1 & 0 & 0 & 0 & 0 & 0 & 0 \end{pmatrix}$$

The above modification thus has an effect not on the *dimension Dim* of the system or on the architecture or the degree of functionality of the cogeneration system, but only on the *dimension $D_N$* and on the *complexity $C_{NS}$* and the standardization, the values of which consequently become

$$D_N = \text{Dim}(M_{S_{CE}}) = \text{Max}\{\#\text{Rows}(M_{S_{CE}}), \#\text{Columns}(M_{S_{CE}})\} = 15$$

$$C_{NS} = \rho(M_{S_{CE}}) = 6$$

Consequently, the *vector of standardization complexity $V_{CNS}$* and the *vector of architectural complexity $V_{CAS}$*, become respectively

$$\overline{V}_{CNS} = \left(D_{CE}, D_{int}, D_N, C_{NS}, \overline{G}_{int}(J), \underline{G}_{int}(J)\right) = (15,6)$$

$$\overline{V}_{CAS} = \left(D_{CE}, D_{int}, \overline{G}_{int}(J), \underline{G}_{int}(J)\right) = (8,12,2.65,1)$$

whilst the *degree $G_{CNS}$ of standardization complexity* and the *degree $G_{CAS}$ of architectural complexity* of the cogeneration system with the fly-wheel assume the values

$$G_{CNS} = \left\| \overline{V}_{CNS} \right\| = 16.16$$

$$G_{CAS} = \left\| \overline{V}_{CAS} \right\| = 14.70$$

Comparing the values of the *degree $G_{CNS}$ of standardization complexity* and of the *degree $G_{CAS}$ of architectural complexity* calculated for the cogeneration system of Figure 2 with the ones obtained by replacing the auxiliary module $C_{E8}$ for the accumulation of electrical energy with a fly-wheel, it may be noted how those corresponding to the system with the fly-wheel are higher than those of the system with the auxiliary accumulation module $C_{E8}$, which consequently is less complex from the standpoint of the standardization as compared to that with the fly-wheel. This is due to the fact that the system with the fly-wheel entails a larger number of tests to be carried out as compared to the ones necessary for standardization of the system with the auxiliary accumulation module $C_{E8}$.

From the above comparison it clearly emerges how the choice of one component instead of another, given the same operative content and degree of architectural complexity, considerably affects the process of standardization of an interconnected system as regards its complexity.

As has been described, we shall suppose, for example, substituting in the system $S_{CE}$ of Figure 2 the high-pressure internal-combustion engine $C_{E2}$ with a low-pressure engine that does not entail the use of the compressor $C_{E1}$, which can thus be eliminated from the system $S_{CE}$ of Figure 2.

In this case, the modification made affects the *dimension Dim* of the system and its *degree of interconnection $G_{int}$*, but the tests to be carried out would remain substantially the same.

Consequently, the *vector of standardization complexity $V_{CNS}$* and the *vector of architectural complexity $V_{CAS}$* become respectively

$$\overline{V}_{CNS} = \left( D_{CE}, D_{int}, D_N, C_{NS}, \overline{G}_{int}(J), \underline{G}_{int}(J) \right) = (14,6)$$

$$\overline{V}_{CAS} = \left( D_{CE}, D_{int}, \overline{G}_{int}(J), \underline{G}_{int}(J) \right) = (7,11,2.65,1)$$

whilst the *degree $G_{CNS}$ of standardization complexity* and the *degree $G_{CAS}$ of architectural complexity* of the cogeneration system without the compressor assume the values

$$G_{CNS} = \left\| \overline{V}_{CNS} \right\| = 15.23$$

$$G_{CAS} = \left\| \overline{V}_{CAS} \right\| = 13.34$$

Comparing said results with those obtained for the system $S_{CE}$ with the compressor $C_{E1}$, it may be noted how the architectural complexity of the system without compressor is obviously smaller than that with the compressor, but the *standardization complexity* of the two systems has remained unvaried.

In the case where in the system of Figure 2 there were to be eliminated the compressor $C_{E1}$, the high-pressure internal-combustion engine $C_{E2}$ were to be replaced with a low-pressure engine, and the auxiliary accumulation module $C_{E8}$ were to be replaced with a fly-wheel, there would be obtained a *vector of standardization complexity $\overline{V}_{CNS}$* and a *vector of architectural complexity $\overline{V}_{CAS}$* equal to

$$\overline{V}_{CNS} = \left( D_{CE}, D_{int}, D_N, C_{NS}, \overline{G}_{int}(J), \underline{G}_{int}(J) \right) = (15,6)$$

$$\overline{V}_{CAS} = \left(D_{CE}, D_{int}, \overline{G}_{int}(J), \underline{G}_{int}(J)\right) = (7, 11, 2.65, 1)$$

whilst the *degree* $G_{CNS}$ *of standardization complexity* and the *degree* $G_{CAS}$ *of architectural complexity* of the cogeneration system would assume the values

$$G_{CNS} = \left\| \overline{V}_{CNS} \right\| = 16.16$$

$$G_{CAS} = \left\| \overline{V}_{CAS} \right\| = 13.34$$

We shall now suppose, for example, adding to the system $S_{CE}$ of Figure 2 two further components, such as, for example, a heat pump connected to the thermal module $C_{E5}$ and a thermal-accumulation device connected to the heat pump.

To obtain type approval of the aforesaid system, in addition to the execution of the tests corresponding to the system of Figure 2, it is necessary to carry out further safety and chemical tests. Furthermore, the presence of the heat pump and of the system of thermal accumulation modify the degree of functionality of the system under examination since they add to the system the functions performed by the new components, namely:

- the production of cold, and
- thermal accumulation.

Consequently, for the aforesaid system configuration, the *vector of standardization complexity* $\overline{V}_{CNS}$ and the *vector of architectural complexity* $\overline{V}_{CAS}$ become, respectively

$$\overline{V}_{CNS} = \left(D_N, C_{NS}\right) = (14, 6)$$

$$\overline{V}_{CAS} = \left(D_{CE}, D_{int}, \overline{G}_{int}(J), \underline{G}_{int}(J)\right) = (10, 14, 2.65, 1)$$

whilst the *degree* $G_{CNS}$ *of standardization complexity* and the *degree* $G_{CAS}$ *of architectural complexity* assume the values:

$$G_{CNS} = \left\| \overline{V}_{CNS} \right\| = 15.23$$

$$G_{CAS} = \left\| \overline{V}_{CAS} \right\| = 17.44$$

In the case where, once again by way of example, in addition to adding the heat pump and the thermal-accumulation device, in the system $S_{CE}$ of Figure 2 the compressor $C_{E1}$ is eliminated, the high-pressure internal-combustion engine $C_{E2}$ is replaced with a low-pressure engine, and the auxiliary accumulation module $C_{E8}$ is replaced with a fly-wheel, the *vector of standardization complexity* $\overline{V}_{CNS}$ and the *vector of architectural complexity* $\overline{V}_{CAS}$ become, respectively

$$\overline{V}_{CNS} = \left(D_{CE}, D_{int}, D_N, C_{NS}, \overline{G}_{int}(J), \underline{G}_{int}(J)\right) = (16,6)$$

$$\overline{V}_{CAS} = \left(D_{CE}, D_{int}, \overline{G}_{int}(J), \underline{G}_{int}(J)\right) = (10, 14, 2.65, 1)$$

whilst the *degree $G_{CNS}$ of standardization complexity* and the *degree $G_{CAS}$ of architectural complexity* assume the values

$$G_{CNS} = \left\|\overline{V}_{CNS}\right\| = 17.09$$

$$G_{CAS} = \left\|\overline{V}_{CAS}\right\| = 17.44$$

Thanks to the method of the present invention it is possible to optimize the design of an interconnected system in so far as, through the determination of the *degree $G_{CNS}$ of standardization complexity* and of the *degree $G_{CAS}$ of architectural complexity,* it is possible both to obtain a rough indication of the complexity of the process of verification of the normative compliance of the interconnected system that is to be designed and type-approved and to evaluate different system configurations in order to simplify, wherever possible, said process of verification and reduce the costs linked thereto.

Finally, it is clear that modifications and variations can be made to the method described and illustrated herein, without thereby departing from the sphere of protection of the present invention, as defined in the annexed claims.

**Claims**

1. A method for determining the complexity of a process of type approval of an interconnected system ($S_{CE}$), **characterized in that** it comprises:

   - defining a mathematical formalism that links architectural and functional characteristics of said interconnected system *($S_{CE}$)* to criteria of type approval defined in at least one standard; and
   - determining a quantity ($G_{CNS}$, $G_{CAS}$) that provides an indication of the complexity of said process of type approval on the basis of said mathematical formalism.

2. The method according to Claim 1, wherein said interconnected system comprises a plurality of components (CE) interconnected to one another and each designed to perform a function of a technical type and wherein defining said mathematical formalism comprises:

   - determining the number of said components (*CE*) forming part of said interconnected system ($S_{CE}$);- determining the number of interconnections ($I_n$) between said components *(CE)* of said interconnected system ($S_{CE}$);
   - determining a quantity (Dim) indicating the dimensions of said interconnected system *($S_{CE}$)* on the basis of said number of components(CE) and of said number of interconnections ($I_n$);- determining the number of functions ($SF_n$) performed by said interconnected system and the number of functions (Fn) performed by each component of said interconnected system;
   - identifying a standard ($N_c$) and at least one specification ($C_c$), which forms part of said standard ($N_c$) and defined in which are technical tests ($P_c$) that it is necessary to carry out on each of said components (CE) and on said system *($S_{CE}$)* in order to verify whether said components (CE) and said system *($S_{CE}$)* meet given criteria of type approval;
   - determining on the basis of said standard the number of specifications ($C_C$), defined in which are said criteria of type approval that must be met by each of said components (CE) and said system *($S_{CE}$)*, and the number of said tests ($P_C$) to be carried out on each of said components (CE) and on said system ($S_{CE}$);- determining a type-approval matrix ($M_{SCE}$) containing said number of specifications ($C_C$) and said number of said tests ($P_C$);- processing said type-approval matrix ($M_{SCE}$) ;
   - determining, on the basis of said type-approval matrix ($M_{SCE}$), a quantity ($D_N$) indicating an amount of work that it is necessary to perform for carrying out said process of type approval;
- determining, on the basis of said type-approval matrix, a quantity $(C_{NS})$ indicating the complexity of said amount of work that it is necessary to perform for carrying out said process of type approval; and
- determining said quantity $(G_{CNS})$ that provides an indication of the complexity of said process of type approval on the basis of said quantity $(D_N)$ indicating an amount of work that it is necessary to perform for carrying out said process of type approval and of said quantity $(C_{NS})$ indicating the complexity of said amount of work that it is necessary to perform for carrying out said process of type approval.

3. The method according to Claim 2, wherein:

- said type-approval matrix $(M_{SCE})$ comprises a number of rows equal to said number of said specifications $(C_C)$ and a number of columns equal to said number of said tests $(P_C)$ ;
- said quantity $(D_N)$ indicating an amount of work that it is necessary to perform for carrying out said process of type approval corresponds to said number of rows;
- said quantity indicating the complexity of said amount of work that it is necessary to perform for carrying out said process of type approval is determined on the basis of the rank of said type-approval matrix; and
- said quantity $(C_{NS})$ that provides an indication of the complexity of said process of type approval is determined on the basis of the norm of said number of rows and of said rank of said type-approval matrix.

4. The method according to Claim 2, wherein defining said mathematical formalism moreover comprises:

- determining an interconnection matrix $(M_1)$ containing said number of components (CE) of said interconnected system $(S_{CE})$ and said number of interconnections $(I_n)$ between said components (CE) of said interconnected system $(S_{CE})$; and
- determining a quantity $(\overline{G}_{int}(J))$ indicating a maximum degree of interconnection between said component s (CE) of said interconnected system $(S_{CE})$ and a quantity $(\underline{G}_{int}(J))$ indicating a minimum degree of interconnection between said components (CE) of said interconnected system $(S_{CE})$ on the basis of said interconnection matrix $(M_1)$.

5. The method according to Claims 1, 2 and 4, wherein said quantity $(G_{CAS})$ that provides an indication of the complexity of said process of type approval is determined on the basis of said number of said components (CE) forming part of said interconnected system, of said number of interconnections $(I_n)$ between all the components (CE) of said system $(S_{CE})$, of said quantity $(\underline{G}_{int}(J))$ indicating a maximum degree of interconnection between said components of said system and of said quantity $(\underline{G}_{int}(J))$ indicating a minimum degree of interconnection between said components of said system.

6. The method according to Claim 5, wherein said quantity $(G_{CAS})$ that provides an indication of the complexity of said process of type approval is determined on the basis of the norm of said number of said components (CE) forming part of said interconnected system, of said number of interconnections $(I_n)$ between all the components (CE) of said system $(S_{CE})$, of said quantity $(\underline{G}_{int}(J))$ indicating a maximum degree of interconnection between said components of said system, and of said quantity $(\underline{G}_{int}(J))$ indicating a minimum degree of interconnection between said components of said system.

Fig.1

```
┌─────────────────────────┐
│   Identify number and   │
│   type of components    │────100
│     of the system       │
└─────────────────────────┘
            │
            ▼
┌─────────────────────────┐
│     Identify number of  │
│ interconnections between the│──110
│   components of the system  │
└─────────────────────────┘
            │
            ▼
┌─────────────────────────┐
│  Define dimensions of the│────120
│         system           │
└─────────────────────────┘
            │
            ▼
┌─────────────────────────┐
│ Define number of functions of│
│   the system and number of   │──130
│  functions of the components  │
└─────────────────────────┘
            │
            ▼
┌─────────────────────────┐
│ Identify number of directives,│──140
│ standards, specifications, and tests│
└─────────────────────────┘
            │
            ▼
┌─────────────────────────┐
│   Define certification   │────150
│         matrix           │
└─────────────────────────┘
            │
            ▼
┌─────────────────────────┐
│   Process certification  │────160
│         matrix           │
└─────────────────────────┘
            │
            ▼
┌─────────────────────────┐
│   Determine dimension    │
│   of standardization     │────170
│      of system           │
└─────────────────────────┘
            │
            ▼
┌─────────────────────────┐
│ Determine standardization│────180
│  complexity of the system│
└─────────────────────────┘
            │
            ▼
┌─────────────────────────┐
│   Determine degree of    │
│   interconnection of     │────190
│ components of the system │
└─────────────────────────┘
            │
            ▼
           ( A )
```

Fig.2

EP 1 956 537 A1

$$A$$

```
Determine maximum and          200
minimum degrees of
interconnection of the system

Determine degree of            210
functionality of the system

Determine vector of            220
standardization complexity of
the system

Determine vector of            230
architectural complexity of the
system

Determine degree of            240
standardization complexity of
the system

Determine degree of            250
architectural complexity of the
system
```

# Fig.2

32

Fig.3

EP 1 956 537 A1

**European Patent**

**Office**

**DECLARATION**

which under Rule 45 of the European Patent Convention
shall be considered, for the purposes of subsequent
proceedings, as the European search report

Application Number

EP 07 42 5070

| The Search Division considers that the present application, does not comply with the provisions of the EPC to such an extent that it is not possible to carry out a meaningful search into the state of the art on the basis of all claims | CLASSIFICATION OF THE APPLICATION (IPC) |
|---|---|
| Reason: | INV. G06Q10/00 |

The claims relate to subject matter excluded from patentability under Art. 52(2) and (3) EPC. Given that the claims are formulated in terms of such subject matter or merely specify commonplace features relating to its technological implementation, the search examiner could not establish any technical problem which might potentially have required an inventive step to overcome. Hence it was not possible to carry out a meaningful search into the state of the art (Rule 45 EPC). See also Guidelines Part B Chapter VIII, 1-3.

The applicant's attention is drawn to the fact that a search may be carried out during examination following a declaration of no search under Rule 45 EPC, should the problems which led to the declaration being issued be overcome (see EPC Guideline C-VI, 8.5).
-----

| Place of search | Date | Examiner |
|---|---|---|
| The Hague | 14 June 2007 | Rossier, Thomas |

EPO FORM 1504 (P04C37)